# EUROPEAN PATENT APPLICATION

(11) **EP 3 949 738 A1**
(43) Date of publication of application: **09.02.2022**
(21) Application number: 21157510.5
(22) Date of filing: 17.02.2021
(51) Int. Cl.: A22C 11/10

(54) **A SAUSAGE CUTTING APPARATUS**

(30) Priority: 04.08.2020 ZA 202004816
(71) Applicant: Freddy Hirsch Group AG, 6331 Hünenberg (CH)
(72) Inventor: Liebenberg, Henning, 7580 Kuils River (ZA)
(74) Representative: Gille Hrabal Partnerschaftsgesellschaft mbB Patentanwälte

(57) **Abstract**

A sausage cutting apparatus 10 comprises a plastics base plate 36 defining a flat support base for a sausage rope to be cut, first and second cutting assemblies 38,42 including a number of cutting devices 40, a drive system for displacing the cutting devices and a guide rails 72 for guiding the displacement. The cutting assemblies 38, 42 are located at opposite sides of a feed path for the sausage rope and each includes a continuous flexible toothed belt 46 to which the cutting devices 40 are connected. The carrier belts 46 are mounted on the guide rails. The guide rails project upwardly from the support base and include arcuate guide surfaces along which the carrier belts are slidingly displaced, defining sequentially convergent and divergent cutter paths along which associated cutting devices are displaced inwardly for severing the sausage rope and thereafter away from one another for releasing severed sausage portions.

## Description

### FIELD OF INVENTION

This invention relates to a sausage cutting apparatus.

### SUMMARY OF INVENTION

According to the invention there is provided a sausage cutting apparatus including:
a support base defining a feed path along which a sausage rope to be cut is supported and displaced;
a first cutting assembly located at one side of the feed path, including an elongate flexible continuous carrier belt and a number of cutting devices which are connected to the carrier member in a longitudinally-spaced arrangement;
a second cutting assembly located at an opposite side of the feed path, including an elongate flexible continuous carrier belt and a number of cutting devices which are connected to the carrier member in a longitudinally-spaced arrangement;
a drive system for driving synchronous displacement of the carrier belts in order to provide for displacement of the cutting devices of the cutting assemblies;
a guide system for guiding displacement of the carrier belts;
an in-feed system for guiding displacement of the sausage rope into the feed path of the support base between the first and second cutting assemblies,
the sausage cutting apparatus being characterized in that the guide system includes a pair of cutting guide rails on which the carrier belts of the cutting assemblies are mounted, the cutting guide rails projecting upwardly from the support base and being located in a spaced arrangement at opposite sides of the feed path, the cutting guide rails including arcuate guide surfaces along which the carrier belts of the cutting assemblies are slidingly displaced so as to define sequentially convergent and divergent cutter paths for the cutting devices wherein associated cutting devices of the first and second cutting assemblies are initially displaced inwardly along the cutter paths towards one another until the cutting devices mesh for severing the sausage rope and thereafter displaced away from one another for releasing severed sausage portions.

The cutting devices may include cutting blades defining cutting faces wherein the cutting faces of associated cutting devices mesh with a slight interference fit.

Each cutting guide rail may include, in sequence, a blade approach segment, a blade meshing segment, a blade departure segment and a blade return segment. The blade approach segments of the guide rails may converge for displacing associated cutting devices towards one another. The blade meshing segments of the guide rails may initially converge further for displacing the cutting blades of associated cutting devices into meshing engagement with one another for severing the sausage into sections and thereafter, diverge for displacing the cutting blades out of meshing engagement with one another. The blade departure segments of the guide rails may diverge further for displacing the cutting blades of associated cutting devices away from one another. The blade return segments of the guide rails may be configured for displacing the cutting devices from the blade departure segments to the blade approach segments.

The cutting devices of each cutting assembly may be releasably connected to the carrier belts.

The cutting devices of each cutting assembly may include at least one abutment formation and the guide rail of the cutting assembly may define a corresponding abutment surface along which the abutment formation of the cutting device is slidably displaceable thereby to restrain relative movement between the cutting device and the cutting guide rail in a direction normal to the direction of travel of the carrier belt along the guide rail. More specifically, each cutting device may include upper and lower spaced abutment formations and the cutting guide rails may each define corresponding upper and lower abutment surfaces along which the cutting device is slidably displaceable, restraining the cutting device against upward or downward movement relative to the guide rail thereby capturing the cutting device and the carrier belt associated therewith on the cutting guide rail.

The carrier belt of each cutting assembly may be in the form of a continuous flexible toothed belt.

The drive system may include a drive pulley for each cutting assembly for driving the carrier belt. More specifically, the drive pulleys may have drive teeth for engaging the teeth of the drive belt. The drive system may be operable to synchronously driving the drive pulleys in an arrangement wherein the associated cutting devices are sequentially displaced into synchronous meshing engagement with one another for severing the sausage rope into sausage portions.

The sausage cutting apparatus may include an out-feed system for conveying the cut sausage portions from the feed path after the sausage has been cut into portions. More specifically, the out-feed system may comprise a conveyor belt or a flume.

### BRIEF DESCRIPTION OF THE DRAWINGS

Further features of the invention are described hereinafter by way of a non-limiting example of the invention, with reference to and as illustrated in the accompanying diagrammatic drawings. In the drawings:

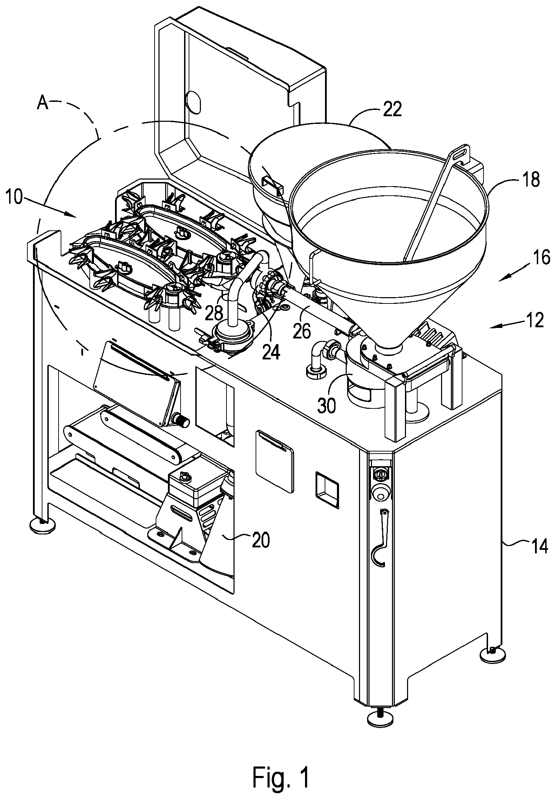

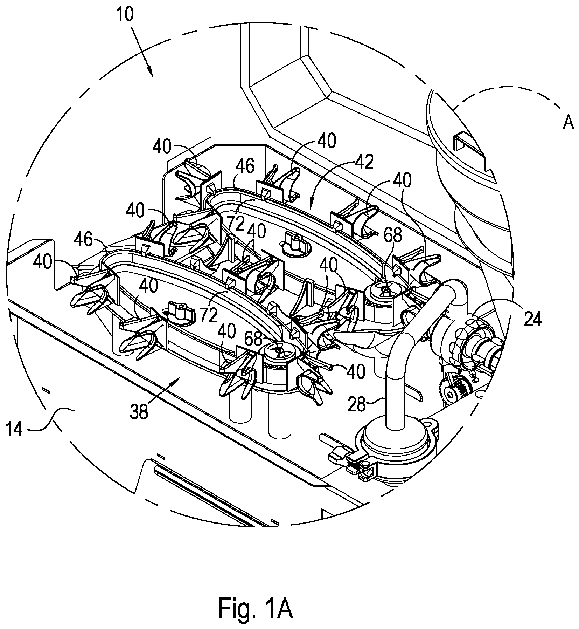

Figure 1 shows a three-dimensional view of sausage processing equipment including a sausage cutting apparatus in accordance with the invention;
Figure 1A shows enlarged detail A of Figure 1;

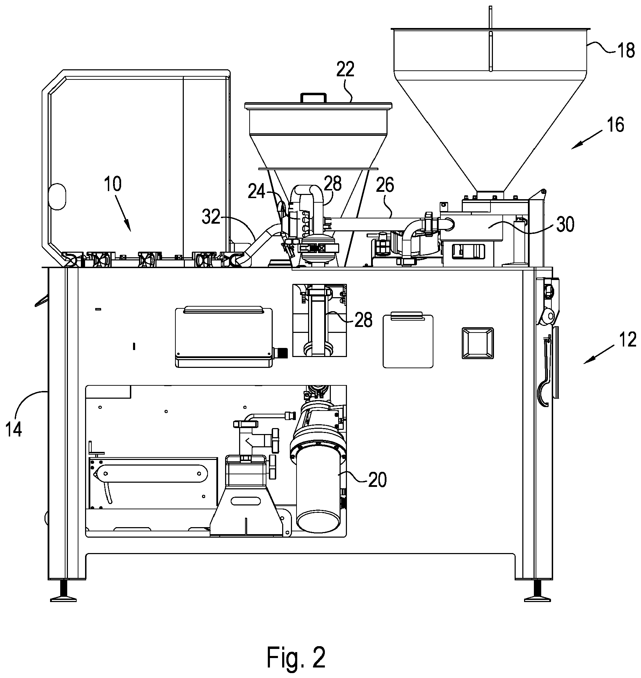

Figure 2 shows a side view of the sausage processing equipment of Figure 1;

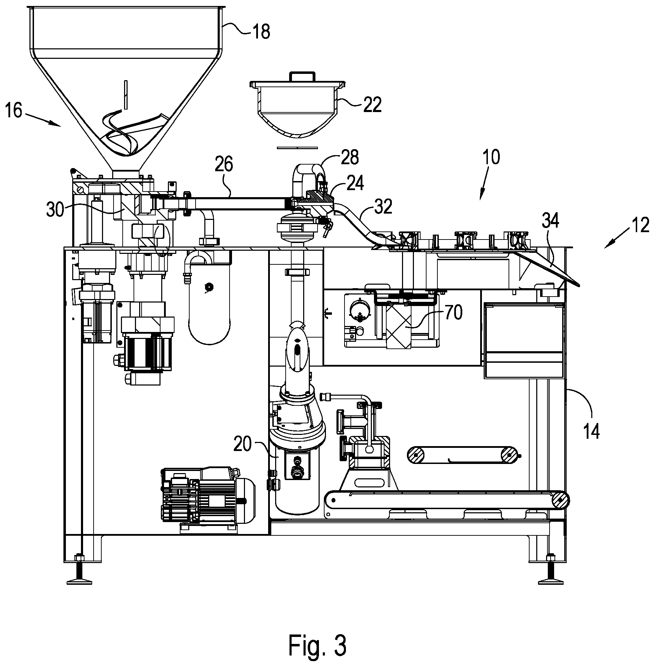

Figure 3 shows an opposite side view of the sausage processing equipment of Figure 1;

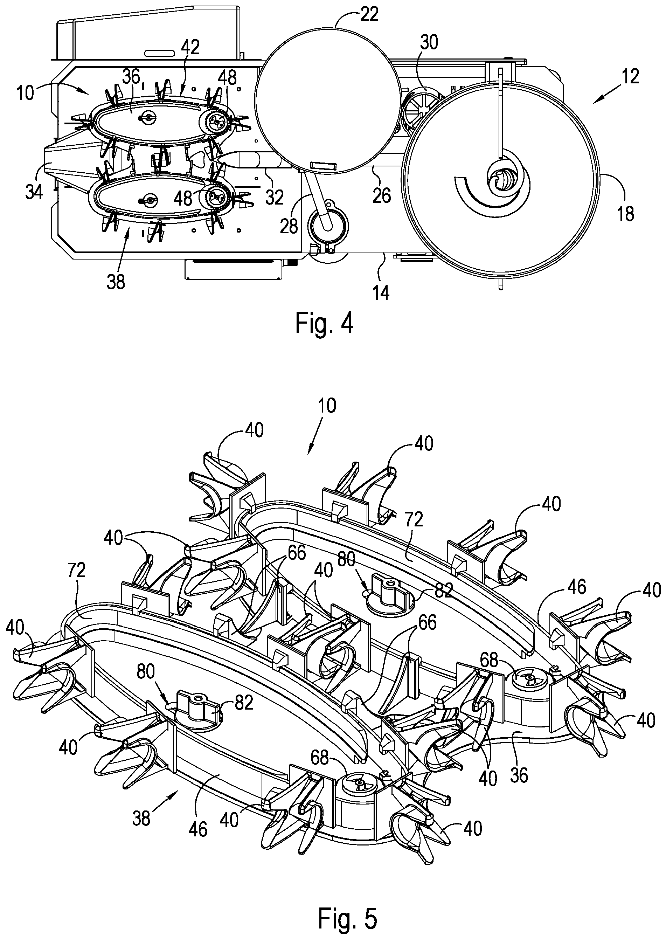

Figure 4 shows a top plan view of the sausage processing equipment of Figure 1;
Figure 5 shows a three-dimensional view of the cutting assemblies of the sausage cutting apparatus of the sausage processing equipment of Figure 1;

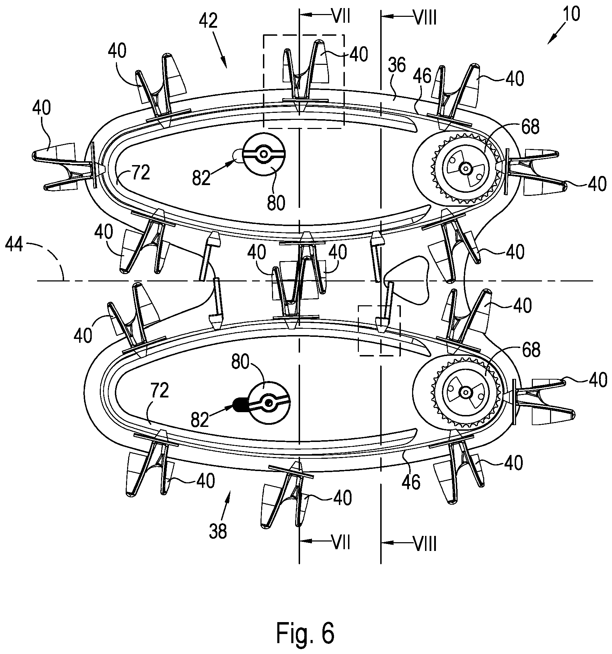

Figure 6 shows a top plan view of the cutting assemblies of the sausage cutting apparatus of Figure 5;

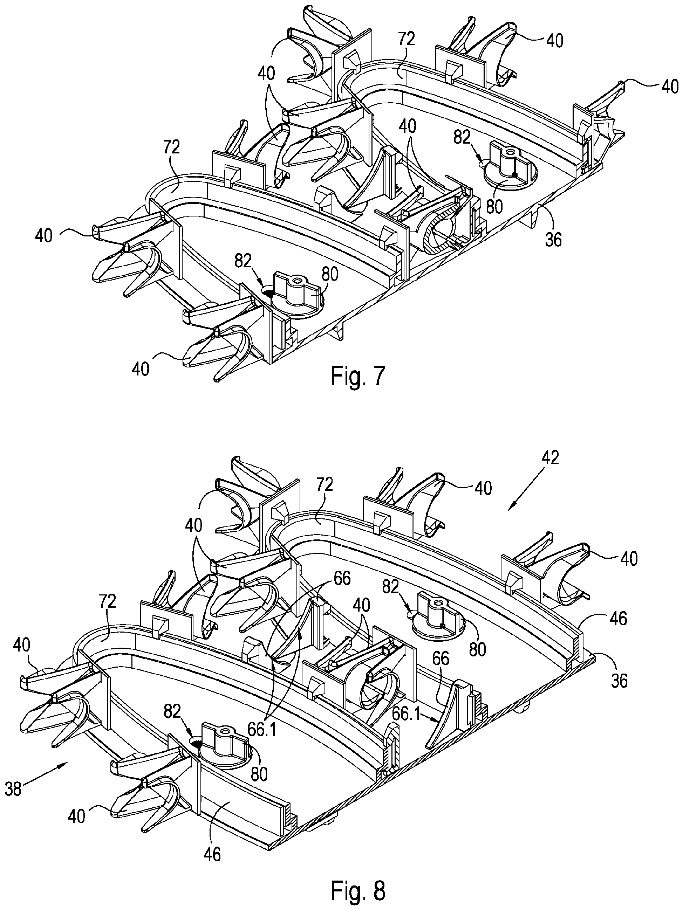

Figure 7 shows a sectional three-dimensional view of the cutting assemblies of Figure 5, sectioned along section line VII - VII of Figure 6;
Figure 8 shows a sectional three-dimensional view of the cutting assemblies of Figure 5, sectioned along section line VIII - VIII of Figure 6;

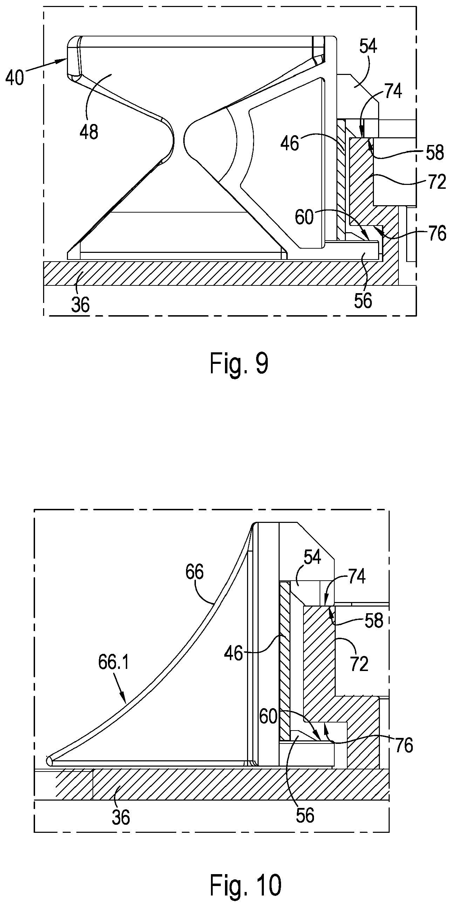

Figure 9 shows a fragmentary enlarged sectional side view of a cutting device located on a guide rail;
Figure 10 shows a fragmentary enlarged sectional side view of a sausage lifting formation located on a guide rail;
Figure 11 shows a top plan view of the base plate including the guide rails of the cutting assembly of Figure 5;
Figure 12 shows a schematic representation of the guide rails and drive pulleys of the cutting assemblies of Figure 5, illustrating the blade approach segment (A), the blade meshing segment (M), the blade departure segment (D) and the blade return segment (R) of each guide rail;

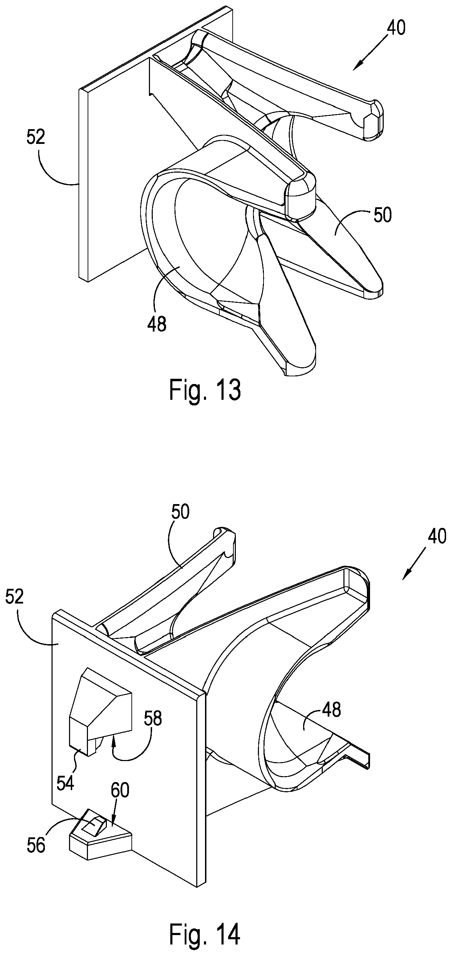

Figure 13 shows a three-dimensional view as seen from the front, of a cutting device of the cutting assemblies of Figure 5;
Figure 14 shows a three-dimensional view as seen from the rear, of a cutting device of the cutting assemblies of Figure 5; and

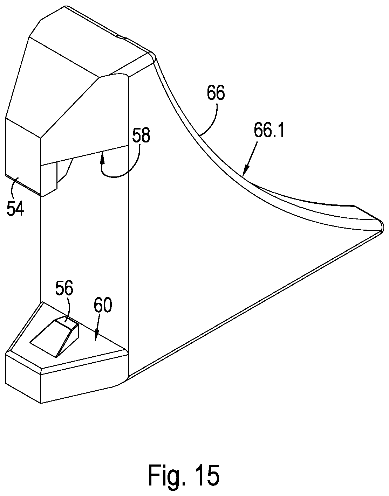

Figure 15 shows a three-dimensional view as seen from the rear, of a sausage lifting formation of the cutting assemblies of Figure 5.

### DETAILED DESCRIPTION OF THE DRAWINGS

With reference to the drawings, a sausage cutting apparatus in accordance with the invention, is designated generally by the reference numeral 10. The sausage cutting apparatus is configured for severing a sausage rope, into separate sausage portions.

The sausage cutting apparatus forms part of sausage processing equipment 12 which includes a stand 14 and a top processing structure 16 mounted on the stand. The processing structure includes a hopper 18 for holding a sausage filler emulsion, a cartridge 20 for holding a sausage gel casing composition, a hopper 22 for holding a chemical setting agent for setting the gel casing composition and an extrusion nozzle 24 for co-extruding the sausage filler emulsion which is fed into the extrusion nozzle via a filler emulsion feed pipe 26 together with the sausage casing gel composition which is supplied to the extrusion nozzle along casing gel feed pipe 28. The casing gel composition is initially provided in a flowable form but after extrusion, sets around the filler under the action of the chemical agent to form a sausage casing. A pump 30 is provided for pumping the filler emulsion to the extrusion nozzle. After co-extrusion, a length of the extruded sausage rope is conveyed along an infeed ramp 32 towards the sausage cutting apparatus 10 for cutting the sausage rope into smaller portions. The sausage processing equipment includes an outfeed flume 34 for conveying the cut sausage portions to a cooker or other processing equipment.

The sausage cutting apparatus 10 comprises, broadly, a unitary moulded plastics base plate 36 defining a flat support base, a first cutting assembly 38 including a number of cutting devices 40, a second cutting assembly 42 including a number of the cutting devices 40, a drive system for driving displacement of the cutting devices and a guide system for guiding displacement of the cutting devices.

The base plate 36 defines a rectilinear feed path 44 between the cutting assemblies along which the extruded sausage rope is supported and slidably displaced.

The first cutting assembly 38 is located at one side of the feed path 44 while the second cutting assembly 42 is located at an opposite side of the feed path with the sausage rope being displaced along the feed path between the first and second cutting assemblies. The first cutting assembly 38 includes a continuous flexible toothed belt 46 to which the cutting devices 40 are releasably connected in a longitudinally-spaced arrangement wherein the cutting devices are spaced along the length of the belt.

Each cutting device 40 is in the form of a unitary moulded or machined plastics structure comprising a cutting blade 48, a cutting support formation 50 which is laterally spaced from the cutting blade and a mounting plate 52. The mounting plate has spaced upper and lower hook formations 54, 56 which clip over upper and lower edge regions of carrier belt 46 for releasably connecting the cutting device to the carrier belt. The upper hook formation 54 defines a downwardly-facing top abutment guide formation 58 and the lower hook formation 56 defines an upwardly-facing bottom abutment guide formation 60.

Each of the cutting devices 40 of the first cutting assembly is associated with a particular one of the cutting devices of the second cutting assembly, with the cutting blade 48 of each of the associated cutting devices being configured to be received within the space defined between the cutting blade 48 and the cutting support formation 50 of the other cutting device. Cutting faces of the associated cutting blades 48 slide past one another in a shearing action for cutting the sausage. More specifically, the cutting blades mesh with a slight interference fit in a conjugate meshing action. The shearing action of the cutting blades tends to displace portions of the sausage in opposite directions. The cutting support formation 50 prevents lateral displacement of the sausage during and immediately after the sausage is cut such that the severed sausage portions continue to travel along the rectilinear feed path 44.

The second cutting assembly 42 is identical to the first cutting assembly 38.

Each cutting assembly 38,42 includes a number of sausage lifting formations 66 releasably connected to the belts 46 at locations between the cutting devices. The support formations are releasably mounted to the carrier belts in similar fashion to the manner in which the cutting devices are mounted to the carrier belts and as such include the upper and lower hook formations 54,56. Each sausage lifting formation 66 includes a curved sloping support surface 66.1 for supporting an underside of the sausage, while it is being cut, the support surface sloping from a proximal end to a distal end thereof for gradually lifting and lowering the sausage as the support formations are displaced towards and away from one another, respectively, in use.

The drive system is operable to synchronously drive the belts 46 of the cutting assemblies 38, 42. The drive system includes a toothed drive pulley 68 for each cutting assembly for driving the belt 46 of the cutting assembly, and an electrical motor 70 which drives the drive pulleys 68 of both cutting assemblies via a drive belt. The drive system synchronously drives the belts 46 in a controlled manner wherein the cutting devices are sequentially displaced into meshing engagement with one another for cutting the sausage rope into sausage portions.

The guide system of the sausage cutting apparatus includes a pair of cutting guide rails 72 on which the carrier belts 46 are mounted. The cutting guide rails are integrally moulded with the base plate 36 and project upwardly from the support base. The guide rails are located in a spaced arrangement at opposite sides of the feed path 44. Outer sides of the guide rails define arcuate guide surfaces along which the carrier belts of the cutting assemblies are slidingly displaced so as to define sequentially convergent and divergent cutter paths for the cutting devices.

During a sausage cutting operation, associated cutting devices of the first and second cutting assemblies 38,42 are initially displaced inwardly along the cutter paths towards one another until the cutting devices mesh for severing the sausage rope and thereafter displaced away from one another for releasing severed sausage portions.

The drive system is operable to displace the carrier belts 46 of the first and second cutting assemblies in a synchronised manner such that each cutting device 40 of the first cutting assembly is associated with a corresponding cutting device 40 of the second cutting assembly in an arrangement wherein, during a cutting operation, associated cutting devices 40 are initially displaced inwardly towards one another for cutting the sausage 12 between them. The associated cutting devices are displaced towards one another until the cutting blade 48 of a particular one of the cutting devices 40 is received within the space defined between the cutting blade 44 and the cutting support formation 50 of the cutting device 40 associated therewith, thereby severing the sausage in a shearing action as explained hereinabove.

The cutting guide rails 72 each define a corresponding top abutment surface 74 along which the top abutment guide formation 58 of the cutting device 40 is slidably displaceable and a corresponding bottom abutment surface 76 along which the bottom guide formation 60 of the cutting device is slidingly displaceable, restraining the cutting device against upward or downward movement relative to the cutting guide rail and thereby capturing the cutting device and the carrier belt associated therewith on the cutting guide rail.

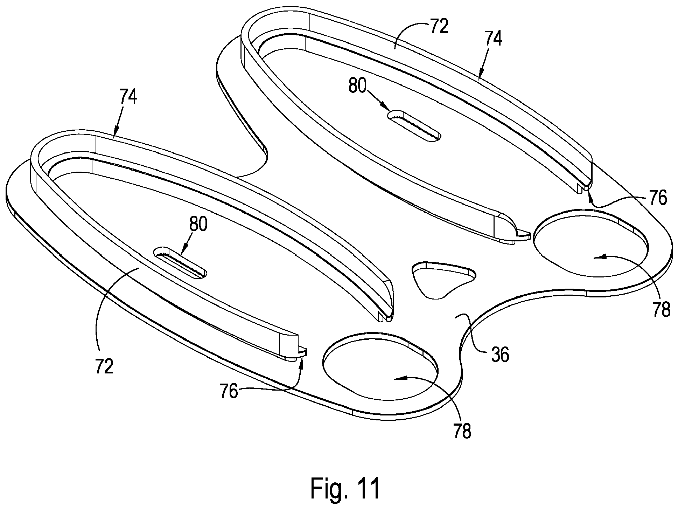

With reference to Figure 11, the base plate 36 defines a pair of apertures 78 in which the drive pulleys 68 are received. The cutting guide rails 72 have identical configurations and are have symmetrical generally oval shapes in plan view. The top abutment surface 74 of each cutting guide rail is defined by an upwardly-facing top edge of the cutting guide rail while the bottom abutment surface 76 is defined by a downwardly-facing bottom edge provided by an undercut in the cutting guide rail. Tensioning slots 80 are defined by the base plate within which fasteners 82 are located for adjusting a position of the base plate and thereby, the cutting guide rails, relative to the drive pulleys for tensioning the carrier belts 46.

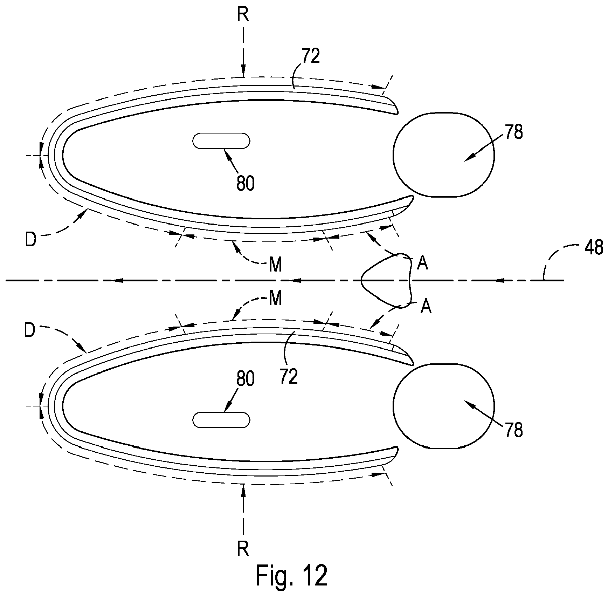

The cutting guide rails guide displacement of the cutting devices of each cutting assembly, along predetermined continuous cutter paths. With reference to Figure 12, the cutter paths defined by the guide rails include, in sequence, a blade approach section (A), a blade meshing section (M) and a blade departure section (D). In addition, each cutter path includes a blade return section (R). The blade approach sections (A) of the cutter paths converge for displacing the cutting blades of associated cutting devices towards one another. The blade meshing sections (M) of the cutter paths follow arcuate paths of travel, initially further converging for displacing the cutting blades of associated cutting devices into meshing engagement with one another for severing the sausage into sections and thereafter, diverging for displacing the cutting blades out of meshing engagement with one another. The blade departure sections (D) of the cutter paths further diverge for displacing the cutting blades of associated cutting devices away from one another. The blade return sections (R) of the cutter paths are configured for displacing the cutting devices from the blade departure sections to the blade approach sections. The cutter paths defined by the guide rails 72 thus also provide for accurate alignment and intersection of the cutting blades of associated cutting devices.

## Claims

1. A sausage cutting apparatus including:
a support base defining a feed path along which a sausage rope to be cut is supported and displaced;
a first cutting assembly located at one side of the feed path, including an elongate flexible continuous carrier belt and a number of cutting devices which are connected to the carrier member in a longitudinally-spaced arrangement;
a second cutting assembly located at an opposite side of the feed path, including an elongate flexible continuous carrier belt and a number of cutting devices which are connected to the carrier member in a longitudinally-spaced arrangement;
a drive system for driving synchronous displacement of the carrier belts in order to provide for displacement of the cutting devices of the cutting assemblies;
a guide system for guiding displacement of the carrier belts;
an in-feed system for guiding displacement of the sausage rope into the feed path of the support base between the first and second cutting assemblies,
the sausage cutting apparatus being **characterized in that** the guide system includes a pair of cutting guide rails on which the carrier belts of the cutting assemblies are mounted, the cutting guide rails projecting upwardly from the support base and being located in a spaced arrangement at opposite sides of the feed path, the cutting guide rails including arcuate guide surfaces along which the carrier belts of the cutting assemblies are slidingly displaced so as to define sequentially convergent and divergent cutter paths for the cutting devices wherein associated cutting devices of the first and second cutting assemblies are initially displaced inwardly along the cutter paths towards one another until the cutting devices mesh for severing the sausage rope and thereafter displaced away from one another for releasing severed sausage portions.

2. The sausage cutting apparatus of claim 1, wherein the cutting devices include cutting blades defining cutting faces wherein the cutting faces of associated cutting devices mesh with a slight interference fit.

3. The sausage cutting apparatus of claim 2, wherein each cutting guide rail includes, in sequence, a blade approach segment, a blade meshing segment, a blade departure segment and a blade return segment.

4. The sausage cutting apparatus of claim 3, wherein the blade approach segments of the guide rails converge for displacing associated cutting devices towards one another.

5. The sausage cutting apparatus of claim 3, wherein the blade meshing segments of the guide rails initially converge further for displacing the cutting blades of associated cutting devices into meshing engagement with one another for severing the sausage into sections and thereafter, diverge for displacing the cutting blades out of meshing engagement with one another.

6. The sausage cutting apparatus of claim 3, wherein the blade departure segments of the guide rails diverge further for displacing the cutting blades of associated cutting devices away from one another.

7. The sausage cutting apparatus of claim 3, wherein the blade return segments of the guide rails are configured for displacing the cutting devices from the blade departure segments to the blade approach segments.

8. The sausage cutting apparatus of claim 1, wherein the cutting devices of each cutting assembly are releasably connected to the carrier belts.

9. The sausage cutting apparatus of claim 1, wherein the cutting devices of each cutting assembly include at least one abutment formation and the guide rail of the cutting assembly defines a corresponding abutment surface along which the abutment formation of the cutting device is slidably displaceable thereby to restrain relative movement between the cutting device and the cutting guide rail in a direction normal to the direction of travel of the carrier belt along the guide rail.

10. The sausage cutting apparatus of claim 9, wherein each cutting device includes upper and lower spaced abutment formations and the cutting guide rails each define corresponding upper and lower abutment surfaces along which the cutting device is slidably displaceable, restraining the cutting device against upward or downward movement relative to the guide rail thereby capturing the cutting device and the carrier belt associated therewith on the cutting guide rail.

11. The sausage cutting apparatus of claim 1, wherein the carrier belt of each cutting assembly is in the form of a continuous flexible toothed belt.

12. The sausage cutting apparatus of claim 1, which includes a drive system including a drive pulley for each cutting assembly for driving the carrier belt.

13. The sausage cutting apparatus of claim 12, wherein the drive pulleys have drive teeth for engaging the teeth of the drive belt.

14. The sausage cutting apparatus of claim 13, wherein the drive system is operable to synchronously driving the drive pulleys in an arrangement wherein associated cutting devices are sequentially displaced into synchronous meshing engagement with one another for severing the sausage rope into sausage portions.

15. The sausage cutting apparatus of claim 1, which includes an out-feed system for conveying the cut sausage portions from the feed path after the sausage rope has been cut into portions.
